# EUROPÄISCHE PATENTANMELDUNG

(11) **EP 1 622 021 A1**
(43) Veröffentlichungstag der Anmeldung: **01.02.2006**
(21) Anmeldenummer: 05015268.5
(22) Anmeldetag: 14.07.2005
(51) Int. Cl.: G06F 11/34

(54) **Verfahren und Anordnung zur Evaluierung von Eingangsgrössen eines Systems**

(30) Priorität: 14.07.2004 DE 102004034215
(71) Anmelder: Deutsche Telekom AG, 53113 Bonn (DE)
(72) Erfinder: Essers, Reiner, 53127 Bonn (DE); Lorenzen, Sören, 53424 Remagen (DE); Sprenger, Olaf, 53225 Bonn (DE)
(74) Vertreter: Riebling, Peter

(57) **Zusammenfassung**

Die Erfindung betrifft ein Verfahren und System zur Evaluierung von Eingangsgrößen eines Systems, bei dem durch mehrere Eingangssignale als Eingangsgrößen in Abhängigkeit von systemeigenen vorgegebenen Bewertungs- und/oder Filterfunktionen an einem Systemausgang ein Ausgangssignal mit mindestens zwei Zuständen ausgegeben wird, von denen jeder eine bestimmte Wertigkeit repräsentiert.

## Beschreibung

Bei der Erfindung handelt es sich um ein Verfahren und System zur Evaluierung von vorzugsweise mehreren Einflussgrößen als Eingangssignale eines Systems, welches insbesondere bei einer Realisierung von gemeinsam genutzten Ressourcen z. B. auf dem Gebiet des Beschaffungswesens eingesetzt ist.

Bisher wirkte sich bei einer Evaluierung nachteilig aus, dass die Einflussgrößen, die für diese Bewertung relevant sind, nicht eindeutig bestimmt oder bestimmbar waren. Sofern diese überhaupt bekannt und bewusst waren, fehlte zudem eine Strukturierung, die eine Gesamtbewertung für eine Realisierung bezüglich der gemeinsamen Ressourcennutzung einsetzbar ist.

Die Aufgabe der Erfindung ist es, ein systematisches und objektives Evaluierungsverfahren mit zugehörigem System anzugeben.

Diese Aufgabe wird durch die kennzeichnenden Teile der unabhängigen Ansprüche gelöst.

Als Vorteil ergibt sich eine wesentlich verbesserte Transparenz bei den Evaluierungsprozessen.

Ein Beispiel für die praktische Umsetzung des Erfindungsgedankens wird im Folgenden dargestellt.

Ausgehend bei einer Problemstellung auf kaufmännischem Gebiet ermittelt das System beispielsweise fünf Merkmalsgruppen, die das Ausgangssignal beeinflussen. Um diese Merkmalsgruppen messbar und bewertbar zu machen, sind den einzelnen Merkmalsgruppen verschiedene Messgrößen zugeordnet, die quantitative und qualitative Einflussgrößen abbilden. Insgesamt werden in diesem Beispiel 15 Messgrößen erfasst, von denen jeweils 5 einer Merkmalsgruppe zugeordnet sind. Im Einzelfall kann es sinnvoll sein, dass die Messgrößen ungleich auf die Merkmalsgruppen verteilt werden, insbesondere dann, wenn eine Zusammengehörigkeit einzelner Messgrößen dieses bedingt. Aus den Messgrößen in ihrer Gesamtheit und der Zuordnung zu den einzelnen Merkmalsgruppen wird eine Aussage zu beispielsweise einem möglichen Einsatz eines Shared Service abgeleitet. Dazu dient ein Scoring-Modell, welches für die einzelnen relevanten Messgrößen eindeutige Bewertungsstufen, wie z. B. "geeignet" oder "nicht geeignet" verwendet. Das, die Gesamtaussage repräsentierende Ausgangssignal ergibt sich durch zweckmäßige Gewichtung der zusammengefassten Messgrößen in den einzelnen Merkmalsgruppen und der Zusammenfassung der Ausgangsgrößen aller Merkmalsgruppen, so dass auch differenzierte Aussagen über die Wertigkeit des Ausgangssignals getroffen werden können. Ggf. kann bereits eine individuelle Gewichtung einzelner oder aller Messgrößen vor der Zusammenfassung in den Merkmalsgruppen zusätzlich vorgesehen werden.

Das System bietet erstmalig die Möglichkeit, das an sich neuartige Konzept des Shared Service für den Einkauf mit den relevanten Einflussgrößen in einem ganzheitlichen Ansatz transparent und allgemein verständlich zu analysieren. Durch die mögliche flexible Gewichtung als Bewertungsfunktion für einzelne Einflussgrößen oder Gruppen von Einflussgrößen ist es zusätzlich möglich, das System zu strukturieren und zielgerichtet für die jeweiligen Anwendungsgebiete, wie eine konzernweite Einführung und Weiterführung eines Shared Services zu konfigurieren.

## Patentansprüche

1. Verfahren zur Evaluierung von Eingangsgrößen eines Systems,
**dadurch gekennzeichnet,**
**dass** durch mehrere Eingangssignale als Eingangsgrößen in Abhängigkeit von systemeigenen vorgegebenen Bewertungs- und/oder Filterfunktionen an einem Systemausgang ein Ausgangssignal mit mindestens zwei Zuständen ausgegeben wird, von denen jeder eine bestimmte Wertigkeit repräsentiert.

2. Verfahren nach Anspruch 1, **dadurch gekennzeichnet, dass** die Messgrößen mehreren Merkmalsgruppen zugeordnet werden, die das Ausgangssignal beeinflussen.

3. Verfahren nach einem der Ansprüche 1 oder 2, **dadurch gekennzeichnet, dass** die Messgrößen gleichmäßig auf die Merkmalsgruppen verteilt werden.

4. Verfahren nach einem der Ansprüche 1 oder 2, **dadurch gekennzeichnet, dass** die Messgrößen ungleich auf die Merkmalsgruppen verteilt werden, sofern eine Zusammengehörigkeit einzelner Messgrößen dieses bedingt.

5. Verfahren nach einem der vorhergehenden Ansprüche, **dadurch gekennzeichnet, dass** aus den Messgrößen in ihrer Gesamtheit und der Zuordnung zu den einzelnen Merkmalsgruppen eine Aussage eines möglichen Einsatzes eines Shared Service abgeleitet wird

6. Verfahren nach einem der vorhergehenden Ansprüche, **dadurch gekennzeichnet, dass** ein Scoring-Modell angewendet wird, welches für die einzelnen relevanten Messgrößen eindeutige Bewertungsstufen verwendet.

7. Verfahren nach einem der vorhergehenden Ansprüche, **dadurch gekennzeichnet, dass** sich das eine Gesamtaussage repräsentierende Ausgangssignal durch zweckmäßige Gewichtung der zusammengefassten Messgrößen in den einzelnen Merkmalsgruppen und der Zusammenfassung der Ausgangsgrößen aller Merkmalsgruppen ergibt.

8. Verfahren nach einem der vorhergehenden Ansprüche, **dadurch gekennzeichnet, dass** bereits vor der Zusammenfassung in den Merkmalsgruppen eine individuelle Gewichtung einzelner oder aller Messgrößen erfolgt.

9. System zur Evaluierung von Eingangsgrößen eines Systems,
**dadurch gekennzeichnet,**
**dass** das System mindestens zwei Eingänge aufweist, dass mit diesen EingängenEinheiten verknüpft sind, die zur Durchführung der Bewertungs- und/oder Filterfunktionen einsetzbar sind und dass mindestens zwei der Einheiten mit einer Ausgangseinheit verknüpfbar sind, wobei am Ausgang des Ausgangseinheit eine verarbeitete Größe abrufbar ist.
